# EUROPEAN PATENT SPECIFICATION

(11) **EP 1 083 789 B1**
(45) Date of publication and mention of the grant of the patent: **14.05.2003**
(21) Application number: 99930077.5
(22) Date of filing: 07.06.1999
(51) Int. Cl.: A01M 7/00

(54) **AN APPARATUS FOR APPLICATION OF LIQUID USED IN AGRICULTURE, HORTICULTURE AND FORESTRY, USE OF SUCH AN APPARATUS, AND A METHOD OF ITS MANUFACTURING**
VORRICHTUNG ZUM AUFTRAGEN VON FLÜSSIGKEIT IN DER LANDWIRTSCHAFT, IM GARTENBAU UND IN DER FORSTWIRTSCHAFT, ANWENDUNG DIESER VORRICHTUNG UND DAZUGEHÖRIGES HERSTELLUNGSVERFAHREN
APPAREIL PERMETTANT D'APPLIQUER UN LIQUIDE UTILISE EN AGRICULTURE, EN HORTICULTURE ET EN FORESTERIE, SON UTILISATION ET SON PROCEDE DE PRODUCTION

(30) Priority: 10.06.1998 SE 9802072
(43) Date of publication of application: 21.03.2001
(73) Proprietor: Acanova AB, 751 08 Uppsala (SE)
(72) Inventor: ALNESS, Kenneth, S-741 94 Knivsta (SE); ANDERSSON, Sven, S-741 92 Knivsta (SE); BENGTSSON, Per, S-383 92 Mönster s (SE); BERGMAN, Sven, S-754 28 Uppsala (SE); ENFÄLT, Patrik, S-757 52 Uppsala (SE); ENGQVIST, Anders, S-754 22 Uppsala (SE); ENGSTRÖM, Niclas, S-745 98 Enköping (SE); LARSSON, Torvald, S-736 93 Kungsör (SE); WESTBERG, Carl, S-740 11 Länna (SE); WRETBLAD, Per, S-755 92 Uppsala (SE)
(74) Representative: Perneborg, Henry T.
(86) International application number: PCT/SE99/00977
(87) International publication number: WO 99/063810

(56) References cited:
- EP-A1- 0 437 801
- DE-A1- 1 482 350
- DE-B1- 2 359 400
- DK-U3- 9 700 165
- US-A- 2 580 145

## Description

### Field of technology

The present invention relates to an apparatus designed to be mounted on an agricultural sprayer with the purpose of decreasing the drift and improving the deposition, penetration and uniformity of distribution when applying liquids such as pesticides and liquid plant nutrients used in agriculture, horticulture and forestry.

### Background of the invention

Application and handling of pesticides is a delicate task which may cause substantial costs, both economical and environmental. Consequently, it is of outermost importance for a long-term efficient and persistent production, e.g. food supply, that the distribution of pesticides is executed in an efficient and safe way. For the application method to meet these needs it is required to:
Reduce environmental impact: Decreasing the environmental pressure exerted by the chemicals requires reduced doses and decreased drift and leach. To make it possible to reduce the doses without forgoing the final result an efficient application method is required which ensures optimal chemical deposition onto the spray target.
Reduce costs: The modern application method required for better utilization of the chemicals must also be as cheap as possible for the decreased usage to result in reduced overall costs. This is a prerequisite of the method to result in common use.

Application of pesticides may be executed with areal spraying with agricultural sprayer, band spraying or contact application. Areal spraying implies that the whole field is prepared/sprayed while band spraying means that only one band including the planting row or the space between the planting rows is sprayed. Contact application means that the pesticide is transferred by direct contact. This type of control occurs only to a limited extent and only in specific control situations. Conventional methods for areal spraying comprise agricultural sprayers equipped with hydraulic sprayers uniformly spaced at a distance of 50 cm along the boom. When spraying, only a fraction of the sprayed liquid reaches the noxious object. Portions of the spray liquid will drift with the wind or evaporate. and some portion. will land on the ground or on parts of the plants where the liquid has no effect. Different estimations of the fraction of the sprayed liquid which actually has effect, i.e. reaches the spray target, varies between 0,1 to 30%.

The most important element in reducing the dose, and decreasing the environmental impact, is to achieve good deposition onto the spray target. This is difficult to accomplish with conventional methods because of the following reasons:
High boom level: High boom level, 50 cm above the ground, is required to achieve a uniform liquid distribution. This increases the risk for drift. A cause of increased drift is, among other things, that the droplets are exposed to the wind during a long time period on their way from the nozzle to the spray target. This, in combination with the fact that the wind velocity increases exponentially with increasing distance from ground, makes the boom level an important contributor to the drift.
Boom movements: Boom movements is one of the most important causes for a non-uniform liquid distribution. Both horisontal and vertical boom movements may cause substantial dose variations over the field. The non-uniform liquid distribution results in poor treatment effect, which must be compensated by an increased dose. In addition, there is a risk of damage on the crop in places which receive the highest doses. The vertical boom movements involve also often damage on the nozzles when these are forced into contact with the ground and crop.
Drift: The drift is a problem of great concern which is affected by weather conditions, spray quality and exposure of the droplets to weather influence. At given weather conditions, the only possible measure to reduce the drift with conventional methods is to choose a coarser spray quality. Conventional methods normally use medium or coarse spray quality (big droplets). Coarser spray quality involves lower degree of coverage and therefore lower pesticide control effect which must be compensated with higher dose.
Penetration: With conventional application methods the droplets have low velocity when they reach the stand, which impair the penetration into stands with high density. The droplets also fall vertically which gives poor deposition under leaves and onto vertical surfaces. The penetration is of special importance for instance in control of *Phytophthora infestans* on potato. *Phytophthora infestans* on potato causes great losses and the fungus is often hiding in high density stands.

In application with conventional methods, liquid quantities in the order of 200 l/ha (litres per hectare) is often recommended in application onto low crop stands and 300-400 l/ha onto high density and high crop stands. These relatively large liquid quantities decrease the efficiency of control because of the increased number of refillments required, which increases the costs and decreases the spray time. It is not rare that refillments, including transports, occupy one third of the total treatment time. The weather is a very limiting factor for chemical control and the number of opportunities to spray are few. Consequently, it is of great importance that the spray opportunities are efficiently utilized. The possibility to conduct control at optimal time also maximizes the biological effect and facilitates dose reduction.

### Prior art

Traditional spray methods have been used since the beginning of chemical control by the end of the 19th century, and it is the purpose of the present invention to solve the accompanying problems. Below, band spraying, contact application and the conventional methods of areal spraying with agricultural sprayer will be described. Regarding areal spraying also more modern methods, intended to solve the problems of conventional areal spraying methods though with unsatisfactory solutions, will be described.

Conventional methods imply that the nozzle/nozzles is/are positioned and mounted on the boom with downwardly directed spray direction.

Band spraying means that a band. including the planting row or the space between planting rows, is sprayed. The method is used for row growing crops such as sugar-beets, strawberrys and outdoor cultivated vegetables. Band spraying may be performed with a modified agricultural sprayer or a separate suitably equipped machine. In order to keep the distance between the ground and the nozzles, one or more, at a constant level, the nozzles are often mounted on runners, such as described in US Patent no. 2580145 and German patent no 1482350. In some cases also tunnels are used to protect both the spray shower from external influence and the portions of the ground/crop not to be sprayed.

In case of contact application, pesticides are transferred to the target by direct contact using ropes, sheets or rolls. Contact application is used, for instance, to control late high-growing weeds in different crops, weeds in watercourses and during control in connection with harvesting with combine. The precondition of using this method, and accomplishing the selective weed control, is that the control object has a deviating, higher height than the surrounding. This makes this method only applicable in very specific control situations.

Irregularities in the liquid distribution when using conventional methods are to a great extent due to boom movements, both horisontal and vertical, while running. These movements depend on the dynamical characteristics of the boom and the sprayer and may to some extent, particularly in the vertical direction, be damped by the use of suspension attachments, as described in German patent no. 2359400.

New application methods used today are often based on some sort of air assistance. Air assistance may be classifed according to two principles, internal or external air assistance.

Internal air assistance means that air is added (by means of a compressor or a fan) inside the nozzle so that the air, together with the liquid, contributes to the droplet formation itself. Independent of the actual method, the principle of internal air assistance makes it, under some circumstances, possible to keep the size of the droplets constant within a certain range, independent of the water flow. In one application of internal air assistance, the required amount of liquid and size of droplets are loaded into a spray computer which controls air and liquid pressure. These systems use conventional deflector nozzles and the recommended boom level is 50 cm or higher. In another application of internal air assistance, nozzles are used where the air flow passes a wing, over which the liquid is led, and forms a film of liquid. The droplets are formed when the liquid is ripped off the edge of the wing by the air jet. The nozzles are spaced with a distance of 16 cm and the recommended boom level is higher than that for conventional methods.

External air assistance means that the air is added (normally by a fan) outside the opening of the nozzle. The formation of droplets is made with conventional nozzles, and the purpose of the air addition is to increase the speed of the droplets towards the spray target. The velocity of the droplets is increased by direct influence of the air jet, or indirectly as the air jet creates a downwardly directed injector effect towards the spray target. When applying methods which use direct influence one also tries to create an air shield which shelters from air drift. The recommended boom level is the same as, or higher than that, for conventional methods.

Another principle includes enclosing of the spray fan against the ground or crop in order to prevent the wind to affect the spray fan.

On the market there were earlier also crop openers available which opened up high crop stands and facilitated lowering of the boom. However, the constructions of the crop openers resulted in strong forces upon the boom construction which caused the booms to break. The crop openers therefore have disappeared from the market.

From the drift point of view it is possible to achieve a positive effect with some applications of internal and external air assistance. However, the result depends to a great extent on the particular settings used, and, in some cases, settings decreasing the drift may result in a risk for poor biological effect. Incorrect settings of air quantities and size of droplets may even result in increased drift.

External air assistance, together with enclosed spray fan and crop opener, may increase the deposition into the crop substantially compared to conventional methods, but often at the expense of increased deposition onto the ground.

As shown above, the current methods have not satisfactory and sufficiently solved the problems of boom movements, boom level, deposition and wind drift. The methods are considerably more expensive than traditional methods and only in exceptional cases is it possible to after-mount the systems on an existing sprayer. The systems require extensive knowledge and carefulness for correct adjustment and all systems, except the one with enclosed spray shower, have at least one more demand for adjustment compared to conventional methods. Some of the systems also require that the adjustments are changed during work depending on wind direction and wind-force.

Conventional methods, as used herein, comprise all prior art.

### Purpose of the invention

The general purpose of the present invention is to provide an apparatus for application of liquids, such as pesticides, which decreases the drift and improves the deposition onto the spray target and improves the spray uniformity, minimizing the consumption of liquids (agrochemicals), decreasing the pressure on the environment and reducing the costs in agriculture. The apparatus is to be after-mountable on a conventional agricultural sprayer without requiring further adjustments. The expression "liquids" in the present application refers primarily to chemical and biological pesticides, such as micro-organisms, different types of plant nutrients and the like, but also all kinds of liquids which can be applied by means of an agricultural sprayer and the apparatus of the present invention.

### Short description of the invention

The purposes of the invention are achieved by a movable mounting of the nozzles, not on the boom but on a resilient, separate part according to the invention, which gives in when making contact with ground or crop. The nozzles will therefore be at approximately the same distance above the spray target even if the ground is uneven and/or the spray boom is moving vertically. The distance between the nozzles and the spray target can therefore be shortened which decreases the drift. Without this resilient feature, there is an evident risk that the distance between the nozzles and the spray target becomes too short with non-uniform liquid distribution and/or damage on the sprayer as a consequence. In high crop stands the apparatus will open up the stand, which also improves the penetration into stands with high density. The spring system also decreases the risk of horisontal boom movements to impair the deposition.

The invention relates to, besides providing the apparatus described in detail below, the use of this apparatus and a method for producing the central, resilient part, below referred to as (A). This part provides a simple construction since it is made in one piece, with low production cost and sufficiently low weight to be mountable on existing booms at used agricultural sprayers.

### Short description of the drawings

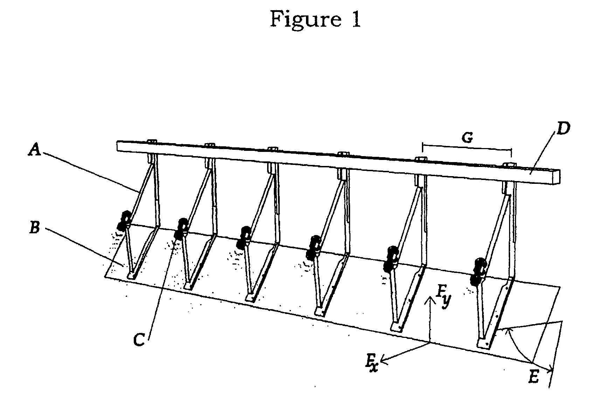

Figure 1 is a functional diagram of the invention mounted on a spray boom wherein:
(A) is the resilient part (the resilient construction),
(B) sheet,
(C) sprayer (nozzle) and sprayer body, and
(D) the boom of the agricultural sprayer, on which the apparatus is mounted, Fₓ and F_{y} are forces acting on the invention in x and y-direction, respectively.
(E) is the direction of motion of the sheet when the force/forces Fₓ and/or F_{y} is/are acting upon it.
(G) is the space between the resilient constructions when these are mounted on the sheet (B) and the spray boom (D).

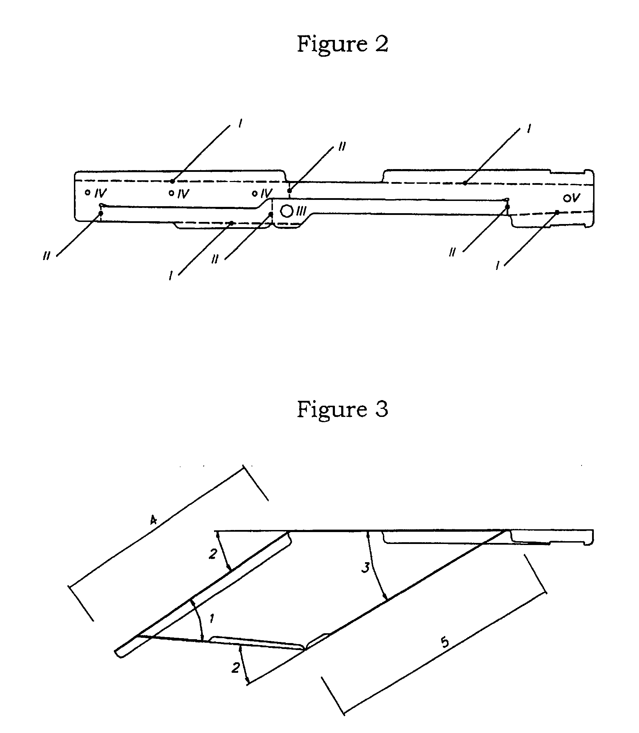

Figure 2 is detailed view of a preferred embodiment of the resilient part (A) before bending, wherein:
I is a line where stiffening by bending is made,
II is a line where bending is made to form a parallellogram shape,
III is a hole for mounting of spray body,
IV are holes for mounting of the sheet (B) in Figure 1, and
V is a hole for mounting of the resilient part (A) at the spray boom (D) in Figure 1.

Figure 3 is a detailed view of a preferred embodiment of the resilient part (A) in Figure 1 in which:
1, 2 and 3 illustrate angles that are important for the operation of the resilient part,
4 illustrates distances on the lower part of the construction on which the sheet is mounted, and
5 are distances on the upper part of the construction.

### Detailed description of the invention

The invention will now be described with reference to the appended drawings.

The invention comprises a resilient construction on which the sprayers (C) and a sheet (B) are mounted. The distance between the lower part of the sheet and the sprayer is fixed, which results in a constant distance between the nozzle and the spray target as the sheet follows the ground or the crop. The sprayers are backwardly angled, and the distance between nozzle and spray target (called boom height in conventional methods) is normally only about 20 cm, but may vary between 5-35 cm. When the apparatus is used on bare ground, or in low crop stands, it is run such that the lower part of the sheet is at the level with, or just above, the ground. In high crop stands the lower part of the sheet is held at two thirds of the stand height.

The contact of the sheet with the crop or the ground leads to reduced boom movements. The fixed low boom level and reduced boom movements, result in a substantial reduction of the drift in comparison with conventional methods, as well as in improved uniformity of the distribution. Since the exposure of the spray fan to the influence of wind is small, fine spray quality can be used and therefore it is possible to reduce the amount of liquid without decreasing the degree of coverage. The applied amount of liquid can be reduced to half of the recommended amount of conventional methods, which leads to a more time efficient control which means that larger areas can be controlled at an optimum point of time.

In high crop stands the sheet opens up the crop and sets the crop in motion which improves the deposition in the stand. All the mentioned advantages, such as small drift, good spray uniformity, high degree of coverage, and deposition in the stand and control at an optimum point of time give the possibility to reduce the doses with preserved treatment effect. This reduces the costs and decreases the environmental influence. Further, the apparatus is simple to operate without any extra demands on adjustments compared to conventional methods.

The unique feature according to the invention comprises its resilient part (A) which gives the apparatus its particular and desired characteristics.

In addition, the apparatus comprises the part (B), called sheet, which comes into contact with ground or crop, and nozzle and armature (C), where the purpose of the nozzle is to disintegrate the liquid to be applied on ground or crop. Sheet and nozzle are mounted on the resilient part which in turn is mounted on the boom (D).

The apparatus according to the invention has, among other things, the following functions which solve the problems described in the background of the invention.
1. To adjust the height of the nozzle (C) above the spray target so that the nozzle, within reasonable limits, will follow the crop or the ondulations of the ground even if the boom (D) is moving vertically. This is accomplished by a force F, which can be divided into the composants Fₓ and F_{y} (Figure 1), acting on the sheet (B) when this sheet is in contact with the crop or ground.
2. To adjust the angle between the ground-level plan and the nozzle (C) so that the angle, within reasonable limits, are the same through the whole motion executed by the nozzle (C) in relation to the boom (D) (according to function 1).
3. To return to a rest position, adjusted for spraying when the apparatus is above (not in contact with) ground or crop, when the apparatus is in an unloaded state (Fₓ, F_{y}=0).
4. To damp the horisontal movements of the boom by action of the damping force Fₓ which is induced by the contact of the sheet with the ground or crop.

These functions are primarily achieved by means of the resilient part (A) according to the following.

The nozzles are movably mounted on the resilient part/parts (A) and give in when brought into contact with ground or crop. The nozzles will therefore keep approximately the same distance to the spray target even if the ground is uneven and/or the spray boom is moving vertically. This makes it possible to keep a short distance between the nozzle and the spray target which results in decreased drift. Without this construction, there would be an evident risk that the distance between the sprayer and the spray target would become too short with non-uniform liquid distribution and/or damage on the nozzle as a consequence.

In high crop stands the apparatus will open up the stand and set the crop in motion which leads to improved deposition and penetration of high density stands. The contact of the apparatus with the crop also produces a horisontal damping force acting on the boom which decreases the horisontal boom movements and therefore improves the uniformity of the distribution.

Since the construction involves improved deposition into the crop, substantially smaller amounts of liquid can consistenly be used. Compared to conventional methods, in many cases only half the recommended amount of liquid is used. This increases the effectiviness of spraying and improves the possibility of application at the optimal point of time and with smaller dose, which gives a positive effect both from an economical and an environmental point of view.

One precondition of this small amounts of liquid to be feasable, with preserved biological effect, is that a fine spray quality can be used. The smaller the droplets the better the coverage. The problem with using small droplets is increased drift and worse penetration. With conventional methods it is often practically impossible to use fine spray quality (small droplets). Tests have shown that the apparatus according to the invention reduces the wind drift by 84% compared to conventional methods and has an excellent deposition into the crop by its unique construction, which facilitates the use of small amounts of liquid. The substantial reduction of the drift, made possible by the invention, allows the desired use of fine spray quality, i.e. smaller and finer droplets than by conventional methods.

In contrast to the conventional methods, the apparatus of the invention has an individual mounting of the nozzles, i.e. the nozzles are not mounted directly on the boom. This enables a desired low boom level with a fixed distance between nozzle and spray target without jeopardizing the uniformity of distribution and risking nozzle damage. The nozzles are angled so that a uniform liquid distribution is achieved despite low boom level.

In one embodiment of the apparatus, the nozzles, one or more, are directed sidewards in order to provide a possibility to spray the spray target from the side during, for instance, band spraying of row growing crops.

By the creation of a force, pointing in the backward direction along the boom, when the apparatus surfs on the ground or the crop during application, the invention involves decreasing boom movements.

It is also because of this low boom level, which ensures that the droplets only are exposed to the lower wind velocities near the ground or the crop, that the decreased drift is achieved.

### Preferred embodiments

It is of crucial importance for the invention that its construction ensures that play and wear and tear of movable elements are avoided. This is accomplished by the manufacturing of the part (A), with the tuned resilient function, in one piece. By means of the unique design of stiffeners and weakeners it has been possible to completely replace physical links, with preserved movability.

By the manufacturing of the resilient part (A) in one piece, with an in-built parallellogram shape, the advantage of a low weight of this part is obtained, in addition to other already described advantages. This is a precondition of the apparatus to be mountable on some boom constructions. Since the desired ability to move and spring can be built-in in one piece there is no need for welding or assembly work during the production of the resilient part. This is very advantageous, both from a production and a user point of view, since no problems with increasing costs of production and weakenings of the material arise.

A preferred and suitable material for production of the part (A) is stainless steel, but other materials, such as plastic, can be used. Stainless steel plate fulfil the demands of a light construction with high structural strength and good resistance against chemicals, which provides an easy to care and handle apparatus for application of e.g. agricultural chemicals. This prescription should not be seen as a limitation but all materials with the desired qualities are conceivable for production of the part (A).

The preferred manufacturing of the part (A) results in reasonable costs of production, low weight in order for the apparatus to be mountable on existing booms, and that the construction lacks links and welding seams which otherwise causes wear and tear and fatigue of material.

A preferred manufacturing procedure comprises the following steps:
1. The resilient part (A) (Fig. 1), preferably manufactured from stainless steel SS 2331-43 0,8 mm, is preferably cut out by laser or water cutter. The part (A) has, for example, a size of 600 x 67 mm.
2. After the part (A) is cut out and the holes are made, the part (A) is bent along the dashed lines (I) and (II) (Fig. 2). The distances (I) (Fig. 2) are bent about 80 degrees in order to stiffen the part (A). In order to obtain the so-called parallellogram, the distances (II) are to be bend so that angle (1) (Fig. 3) is 40 degrees, angle (2) is 35 degrees and angle (3) is 31 degrees.
3. The sprayer body with nozzle are mounted in hole (III) (Fig. 2) so that the centre line through to the nozzle is parallell to the distance (5) (Fig. 3).
4. The piece mounted/manufactured according to the steps above, is mounted on the existing boom (D) (Fig. 1) at the point (V) (Fig. 2).
5. The sheet (B) (Fig. 1), which is made of wear resistant plastic, or other suitable material, and has a width of 250 mm. is mounted symmetrically along the distance (4) (Fig. 3). The sheet is divided into sections according to the divisions of the existing boom (D) (Fig. 1). The distance (G) (Fig. 1) between respective part (A) (Fig. 1) is between 250 and 500 mm, preferably 330 mm.

The preferred embodiment is not intended to restrict the scope of the invention.

### Examples

Below, tables with results from comparative tests of the apparatus according to the present invention and conventional apparatuses are presented. In the tables the apparatus of the present application is called the Apparatus.

**Table 1.**

| **Reduction of wind drift** | |
|---|---|
| Reduction of wind drift by application with the Apparatus, 25 cm sprayer heigh compared to conventional methods, 40 cm boom level. | |

| **Crop and spray quality (nozzle and pressure)** | **Reduction** |
|---|---|
| Short-cut grass ley, spray quality fine (XR 110 01, 4,5 bar) | 84% |
| | |
| Short-cut grass ley, spray quality medium (XR 110 04, 2 bar) | 41% |
| Cereals after coming into ear, spray quality fine (XR 110 01, 4.5 bar) | 41% |

**Table 2.**

| **Weed control effect in barley** | | | |
|---|---|---|---|
| Preparation: Ariane (MCPA 200 g/l + klopyralid 20 g/l + fluroxipyr 40 g/l; Dow-Elanco). Full dose corresponds to 2 l/ha. Weed density in uncontrolled state: 695 g/m². Boom level: conventional methods - 50 cm; the Apparatus - 25 cm. | | | |

| **Method** | **Dose** | **Quantity of** **liquid (l/ha)** | **Weed control** **effect (%)** |
|---|---|---|---|
| The Apparatus | 1/4 | 100 | 89 |
| Conventional methods | 1/4 | 100 | 22 |
| Conventional methods | 1/4 | 200 | 73 |
| The Apparatus | 1 | 100 | 98 |
| Conventional methods | 1 | 100 | 72 |
| Conventional methods | 1 | 200 | 95 |

**Table 3.**

| **Broad leaved weeds in spring barley** | | | | | | |
|---|---|---|---|---|---|---|
| Comparison of weed control effect at different doses, liquid quantities and boom levels. Full dose (per hectare): 10 g Express 75 DF (Tribenuronmetyl 750 g/kg; DuPont) + 0,4 l Starane 180 (Fluroxipyr 180 g/l; DowElanco) + 1 l Mangan 235 (Manganesenitrate equivalent to 235 g manganese per litre; Bayer). | | | | | | |

| **Weed control effect** | | | | | | |
|---|---|---|---|---|---|---|
| Density of weeds in uncontrolled state (g/m) | | Weights of weed in relative numbers | | | | |
| Occasion | | A | B | C | D | E |
| Dose | | Untreated | 25% | 50% | 100% | 100% |
| Liquid quantity | | | 100 l/ha | 100 l/ha | 200 l/ha | 200 l/ha |
| Boom level | | | 25 cm | 25 cm | 45 cm | 25 cm |

| Weed species | | | | | | |
|---|---|---|---|---|---|---|
| *Matricaria* *inodora* | 82 | 100 | 1 | 0 | 0 | 0 |
| *Stellaria* *media* | 37 | 100 | 0 | 0 | 0 | 0 |
| *Sinapsis* *arvensis* | 37 | 100 | 0 | 0 | 0 | 0 |
| *Myosotis* *arvensis* | 29 | 100 | 0 | 0 | 0 | 0 |
| *Chenopodium* *album* | 18 | 100 | 0 | 0 | 0 | 0 |
| Other weeds | 15 | 100 | 47 | 13 | 7 | 67 |
| All weeds | 218 | 100 | 4 | 1 | 1 | 5 |
| Time of treatment: crop 3-4 leaves | | | | | | |

**Table 4.**

| **Broad leaved weeds in oats** | | | | | | |
|---|---|---|---|---|---|---|
| Comparison of weed control effect at different doses, same quantity of liquid and boom level. Full dose (per hectare): 10 g Express 75 DF (Tribenuronmetyl 750 g/kg; DuPont + 0,4 l Starane 180 (Fluroxipyr 180 g/l; DowElanco) + 1 l Mangan 235 (Manganesenitrate equivalent to 235 g manganese per litre; Bayer). | | | | | | |

| **Weed control effect** | | | | | | |
|---|---|---|---|---|---|---|
| Density of weeds in uncontrolled state (g/m) | | Weights of weeds in relative numbers | | | | |
| Occasion | | A | B | C | D | E |
| Dose | | Untreated | 25% | 50% | 75% | 100% |
| Liquid quantity | | | 100 l/ha | 100 l/ha | 100 l/ha | 100l/ha |
| Boom level | | | 25 cm | 25 cm | 25 cm | 25 cm |

| Weed species | | | | | | |
|---|---|---|---|---|---|---|
| *Galeopsis tetrahit* | 36 | 100 | 6 | 25 | 14 | 36 |
| *Brassica napus* | 17 | 100 | 0 | 24 | 0 | 6 |
| *Myosotis arvensis* | 13 | 100 | 0 | 0 | 0 | 0 |
| *Galium aparine* | 7 | 100 | 100 | 14 | 0 | 14 |
| Other weeds | 12 | 100 | 100 | 0 | 17 | 8 |
| All weeds | 85 | 100 | 25 | 17 | 8 | 19 |
| Time of treatment: crop 3 leaves | | | | | | |
| Note: Occasion A to E are the terms for the respective occasion of treatment. In Table 3 occasions B, C and D, and in Table 4 occasions B, C, D and E, with boom level 25 cm, has the Apparatus been used. | | | | | | |

**Table 5.**

| **Control of herb weeds in spring grain with different spraying methods** | | | | | | | |
|---|---|---|---|---|---|---|---|
| Comparison between the Apparatus and conventional boom with different liquid quantities and doses of Ariane (MPCA 200 g/l + klopyralid 20 g/l + fluroxipyr 40 g/l; DowElanco). | | | | | | | |

| **Weed control effect** | | | | | | | |
|---|---|---|---|---|---|---|---|
| Weed species | Weights of weeds g/m² and in relative numbers | | | | | | |
| | A | B | C | D | E | F | G |
| | Untreated | 0,5 lit/ha Ariane 100 lit/ha Apparatus | 0,5 lit/ha Ariane 100 lit/ha Conv. | 0,5 lit/ha Ariane 200 lit/ha Conv. | 2,0 lit/ha Ariane 100 lit/ha Apparatus | 2,0 lit/ha Ariane 200 lit/ha Conv. | 2,0 lit/ha Ariane 200 lit/ha Conv. |
| *Brassica* *napus* | 610 | 52 | 450 | 167 | 10 | 153 | 26 |
| *Erysimum* *cheiranthoides* | 54 | 9 | 43 | 6 | 0 | 26 | 0 |
| *Myosotis* *arvensis* | 8 | 2 | 0 | 0 | 0 | 0 | 5 |
| *Viola arvensis* | 5 | 0 | 2 | 6 | 0 | 0 | 5 |
| *Veronika* *agrestis* | 4 | 14 | 27 | 7 | 6 | 14 | 0 |
| Other weeds | 9 | 0 | 15 | 0 | 1 | 2 | 0 |
| All weeds g/m² | 690 | 77 | 537 | 186 | 17 | 195 | 36 |
| All weeds rel. numb. | 100 | 11 | 78 | 27 | 2 | 28 | 5 |

**Table 6.**

| **Spray liquid distribution** | | | | |
|---|---|---|---|---|
| Distribution of spray liquid in a stand of potato with different application methods. The amount of liquid used is 200 l/ha. The values refer to normalized deposition. Leaf 1 corresponds to the uppermost level in the stand. | | | | |

| | Blad 1 | Blad 1 | Blad 1 | Markobiekt |
|---|---|---|---|---|
| Conventional | 59 | 13 | 7 | 21 |
| Air assisted | 42 | 18 | 12 | 28 |
| Enclosed spray shower | 34 | 23 | 12 | 31 |
| The Apparatus | 35 | 22 | 20 | 23 |

Compared to conventional methods the usage of the apparatus of the invention provides:
- decreased wind drift and thereby decreased risk for damage on adjacent vegetation and environment,
- coverage of almost twice the area by lower amount of liquid per hectare and thereby an improved utilization of the hours well suited for spraying,
- twice the covered area per filling giving half the number of fillings, giving reduced risks for driver and environment.
- full weed control effect achieved with a lower dose.

The last statement is only valid for leaf herbicides. Reducing the doses of soil herbicides may result in decreased effects and shorter long-term effect, and can not be generally recommended solely based on the use of the apparatus of the present invention. However, leaf herbicides is the predominant type of chemicals used in agriculture and a reduction of the doses of these agents will have a large impact on the total amount of pesticides being used.

Although the present invention has been described with reference to particular embodiments, also shown in the appended drawings, it will be apparent for those skilled in the art that many variations and modifications can be done within the scope of the invention as described in the specification and defined in the following claims.

## Claims

1. An apparatus, including at least one resilient part (A), on which a sheet (B) and a nozzle (C) are mounted and the resilient part (A) is mounted on a boom (D), which apparatus is intended to be mounted on an agricultural sprayer with the purpose of decreasing the drift and improving the deposition, penetration and uniformity of distribution when applying liquids, **characterized in that** the resilient part (A) of the apparatus is manufactured in one piece from an elastic material and is stiffened and weakened in sections and in mounting and usage has the shape of a parallellogram.

2. An apparatus according to clam 1, **characterized in that** the nozzle (C) is mounted on the resilient part (A) with the jet direction angled backwards towards the running direction.

3. An apparatus according to claim 1 or 2, **characterized in that** the resilient part (A) is formed so that the angle of the nozzle (C) to the ground-level plan is substantially constant during operation.

4. An apparatus according to anyone of the preceding claims, **characterized in that** the sheet (B) follows the ondulations of the spray target during operation.

5. An apparatus according to anyone of the preceding claims, **characterized in that** the height of the nozzle (C) above the spray target is adjusted so that the nozzle follows the crop or the ondulations of the ground even if the boom (D) is moving vertically, which is achieved by the action of a force F, which can be divided into the force components Fₓ and F_{y}, on the sheet (B) when the sheet is in contact with crop/ground.

6. An apparatus according to anyone of the preceding claims, **characterized in that** the resilient part (A) allows the nozzle to keep a constant distance to the spray target independently of the vertical movements of the boom (D).

7. An apparatus according to anyone of the preceding claims, **characterized in that** the resilient part (A) makes spraying of the spray target from the side possible.

8. An apparatus according to anyone of the preceding claims, **characterized in that** the resilient part (A) is after-mountable on an existing sprayer.

9. An apparatus according to anyone of the preceding claims, **characterized in that** the sprayer is mounted separately from the boom.

10. An apparatus according to anyone of the preceding claims, **characterized in that** the distance between the nozzle (C) and the spray target is 5-35 cm, preferably about 20 cm.

11. An apparatus according to anyone of the preceding claims, **characterized in that** the horizontal movements of the boom are damped by the force F. induced by the contact of the sheet (B) with the ground or the crop.

12. Use of an apparatus, comprising at least one resilient part (A), which is in the shape of a parallellogram and manufactured in one piece of an elastic material and is stiffened and weakened in sections, on which apparatus the sheet (B) and the nozzle (C) are mounted on the resilient part (A), and the resilient part (A) is mounted on the boom (D) of an agricultural sprayer with the purpose of decreasing the drift and improving the deposition, penetration and uniformity of distribution when applying liquids.

13. A method of manufacturing one, in the shape of a parallellogram, resilient part (A) to be used on an agricultural sprayer with the purpose of decreasing the drift and improving the deposition, penetration and uniformity of distribution when applying liquids, **characterized in that** the resilient part (A) is manufactured in one piece of an elastic material and is stiffened and weakened in sections.

## Patentansprüche

1. Vorrichtung mit zumindest einem federnden Teil (A), an dem ein Blatt (B) und eine Düse (C) montiert sind, das federnde Teil (A) ist an einem Baum (D) montiert, die Vorrichtung ist dazu gedacht, an einem landwirtschaftlichen Sprüber montiert zu werden, mit dem Zweck die Drift zu verringern und das Ausbringen, das Eindringen und die Gleichförmigkeit der Verteilung zu verbessern, wenn Flüssigkeiten angewandt werden, **dadurch gekennzeichnet, dass** das federnde Teil (A) der Vorrichtung in einem Stück aus einem elastischen Material hergestellt und in Abschnitten versteift und geschwächt ist und bei Montage und Gebrauch die Form eines Parallelogramms aufweist.

2. Vorrichtung nach Anspruch 1, **dadurch gekennzeichnet, dass** die Düse (C) an dem federnden Teil (A) mit einer rückwärts gegen die Laufrichtung gewinkelten Strahlrichtung montiert ist.

3. Vorrichtung nach Anspruch 1 oder 2, **dadurch gekennzeichnet, dass** das , federnde Teil (A) so geformt ist, dass der Winkel der Düse (C) zur Bodenebene während des Betriebs im Wesentlichen konstant ist.

4. Vorrichtung nach einem der vorstehenden Ansprüche, **dadurch gekennzeichnet, dass** das Blatt (B) den Wenigkeiten des Sprühziels während des Betriebs folgt.

5. Vorrichtung nach einem der vorstehenden Ansprüche, **dadurch gekennzeichnet, dass** die Höhe der Düse (C) über dem Sprühziel so eingestellt ist, dass die Düse der Frucht oder den Welligkeiten des Bodens folgt, selbst wenn der Baum (D) sich vertikal bewegt, was durch die Wirkung der Kraft F, die in Kraftkomponenten Fₓ und F_{y} zerlegt werden kann, auf das Blatt (B) erzielt wird, wenn das Blatt in Kontakt mit der Frucht/dem Boden ist.

6. Vorrichtung nach einem der vorstehenden Ansprüche, **dadurch gekennzeichnet, dass** das federnde Teil (A) es der Düse gestattet einen konstanten Abstand zum Sprühziel unabhängig von der vertikalen Bewegung des Baumes (D) einzuhalten.

7. Vorrichtung nach einem der vorstehenden Ansprüche, **dadurch gekennzeichnet, dass** das federnde Teil (A) ein Besprühen des Sprühziels von der Seite her ermöglicht.

8. Vorrichtung nach einem der vorstehenden Ansprüche, **dadurch gekennzeichnet, dass** das federnde Teil (A) nachträglich an einem bestehenden Sprüher montierbar ist.

9. Vorrichtung nach einem der vorstehenden Ansprüche, **dadurch gekennzeichnet, dass** der Sprüher separat vom Baum montiert ist.

10. Vorrichtung nach einem der vorstehenden Ansprüche, **dadurch gekennzeichnet, dass** der Abstand zwischen der Düse (C) und dem Sprühziel 5 bis 35 cm, vorzugsweise etwa 20 cm ist.

11. Vorrichtung nach einem der vorstehenden Ansprüche, **dadurch gekennzeichnet, dass** die Horizontalbewegungen des Baums durch die Kraft F gedämpft werden, die durch den Kontakt des Blattes (B) mit dem Grund oder der Frucht bewirkt wird.

12. Gebrauch einer Vorrichtung mit zumindest einem federnden Teil (A), welches in Form eines Parallelogramms in einem Stück aus einem elastischen Material hergestellt und in Abschnitten versteift und geschwächt ist, wobei an der Vorrichtung das Blatt (B) und die Düse (C) an dem federnden Teil (A) montiert sind, und das federnde Teil (A) an dem Baum (D) eines landwirtschaftlichen Sprühers zu dem Zweck montiert ist, die Drift zu verringern und das Ausbringen, das Eindringen und die Gleichförmigkeit der Verteilung zu verbessern, wenn Flüssigkeiten angewandt werden.

13. Verfahren zum Herstellen eines an einem landwirtschaftlichen Sprüher mit dem Zweck des Verringerns der Drift und des Verbesserns des Ausbringens, des Eindringens und der Gleichförmigkeit der Verteilung beim Anwenden von Flüssigkeiten zu benutzenden Teils in Form eines Parallelogramms, **dadurch gekennzeichnet, dass** das federnde Teil (A) in einem Stück aus einem elastischen Material hergestellt und in Abschnitten versteift und geschwächt ist.

## Revendications

1. Appareil, comportant au moins une pièce élastique (A), sur laquelle une tôle (B) et une buse (C) sont montées et la pièce élastique (A) est montée sur une rampe, ledit appareil étant prévu pour être monté sur un pulvérisateur agricole dans le but de réduire la surpulvérisation et d'améliorer les dépôts, la pénétration et l'uniformité de la répartition lors de l'application de liquides, **caractérisé en ce que** la pièce élastique (A) de l'appareil est fabriquée en une seule partie à partir d'un matériau élastique et est raidie et affaiblie en sections et présente la forme d'un parallélogramme au montage et à l'utilisation.

2. Appareil selon la revendication 1, **caractérisé en ce que** la buse (C) est montée sur une pièce élastique (A) avec la direction du jet déviée en arrière vers la direction courante.

3. Appareil selon la revendication 1 ou 2, **caractérisé en ce que** la pièce élastique (A) est formée de telle sorte que l'angle de la buse, (C) par rapport au plan du niveau du sol, est sensiblement constant pendant l'opération.

4. Appareil selon l'une quelconque des revendications précédentes, **caractérisé en ce que** la tôle (B) suit les ondulations de la cible de pulvérisation pendant l'opération.

5. Appareil selon l'une quelconque des revendications précédentes, **caractérisé en ce que** la hauteur de la buse (C) au-dessus de la cible de pulvérisation est ajustée de telle sorte que la buse suit la récolte ou les ondulations du sol même si la rampe (D) se déplace verticalement, ce qui est réalisé par l'action d'une force F, qui peut être divisée en composants de force Fₓ et F_{y}, sur la tôle (B) lorsque la tôle est en contact avec la récolte/le sol.

6. Appareil selon l'une quelconque des revendications précédentes, **caractérisé en ce que** la pièce élastique (A) permet à la buse de garder une distance constante par rapport à la cible de pulvérisation indépendamment des mouvements verticaux de la rampe (D).

7. Appareil selon l'une quelconque des revendications précédentes, **caractérisé en ce que** la pièce élastique (A) rend possible la pulvérisation latérale de la cible de pulvérisation.

8. Appareil selon l'une quelconque des revendications précédentes, **caractérisé en ce que** la pièce élastique (A) peut être montée sur un pulvérisateur existant.

9. Appareil selon l'une quelconque des revendications précédentes, **caractérisé en ce que** le pulvérisateur est monté séparément depuis la rampe.

10. Appareil selon l'une quelconque des revendications précédentes, **caractérisé en ce que** la distance entre la buse (C) et la cible de pulvérisation est comprise entre 5 et 35 cm, de préférence environ 20 cm.

11. Appareil selon l'une quelconque des revendications précédentes, **caractérisé en ce que** les mouvements horizontaux de la rampe sont amortis par la force F, induite par le contact de la tôle (B) avec le sol ou la récolte.

12. Utilisation d'un appareil, comprenant au moins une pièce élastique (A), qui présente la forme d'un parallélogramme et est fabriquée en une seule partie à partir d'un matériau élastique et est raidie et affaiblie en sections, appareil sur lequel la tôle (B) et la buse (C) sont montées sur la pièce élastique (A), et la pièce élastique (A) est montée sur la rampe (D) d'un pulvérisateur agricole dans le but de réduire la surpulvérisation et d'améliorer les dépôts, la pénétration et l'uniformité de la répartition lors de l'application de liquides.

13. Procédé de fabrication d'une pièce élastique (A) en forme de parallélogramme destinée à être utilisée sur un pulvérisateur agricole dans le but de réduire la surpulvérisation et d'améliorer les dépôts, la pénétration et l'uniformité de la répartition lors de l'application de liquides, **caractérisé en ce que** la pièce élastique (A) est fabriquée en une seule partie à partir d'un matériau élastique et est raidie et affaiblie en sections.
